(19) Europäisches Patentamt
European Patent Office
Office européen des brevets

(11) **EP 1 757 439 B1**

(12) **EUROPEAN PATENT SPECIFICATION**

(45) Date of publication and mention
of the grant of the patent:
**06.07.2016 Bulletin 2016/27**

(51) Int Cl.:
***B32B 15/08*** *(2006.01)* ***B65D 65/40*** *(2006.01)*

(21) Application number: **05743572.9**

(22) Date of filing: **18.05.2005**

(86) International application number:
**PCT/JP2005/009497**

(87) International publication number:
**WO 2005/115744 (08.12.2005 Gazette 2005/49)**

(54) **RESIN-COATED METAL PLATE**

MIT HARZ BESCHICHTETE METALLPLATTE

PLAQUE DE METAL REVETUE DE RESINE

(84) Designated Contracting States:
**DE DK FR GB**

(30) Priority: **31.05.2004 JP 2004161856**
**31.05.2004 JP 2004161855**
**31.05.2004 JP 2004161854**

(43) Date of publication of application:
**28.02.2007 Bulletin 2007/09**

(73) Proprietor: **JFE Steel Corporation**
**Tokyo, 100-0011 (JP)**

(72) Inventors:
• **YAMANAKA, Yoichiro,**
**c/o Intellectual Property Dept**
**Chiyoda-ku,Tokyo 1000011 (JP)**
• **SUZUKI, Takeshi,**
**c/o Intellectual Property Dept.**
**Chiyoda-ku,**
**Tokyo 1000011 (JP)**
• **IWASA, Hiroki,**
**Intellectual Property Dept.**
**Chiyoda-ku,**
**Tokyo 1000011 (JP)**
• **KITAGAWA, Junichi,**
**c/o Intellectual Property Dept**
**Chiyoda-ku,**
**Tokyo 1000011 (JP)**

• **WATANABE, Toyofumi,**
**Intellectual Property Dept.**
**Chiyoda-ku,**
**Tokyo 1000011 (JP)**
• **NAKAI, Katsunori,**
**c/o Intellectual Property Dept.**
**Chiyoda-ku,**
**Tokyo 1000011 (JP)**
• **OTA, Mitsunori,**
**c/o Intellectual Property Dept.**
**Chiyoda-ku,**
**Tokyo 1000011 (JP)**

(74) Representative: **Grünecker Patent- und**
**Rechtsanwälte**
**PartG mbB**
**Leopoldstraße 4**
**80802 München (DE)**

(56) References cited:
**EP-A1- 1 174 457      JP-A- 6 155 660**
**JP-A- 7 316 317       JP-A- 2002 264 258**
**JP-A- 2002 347 169    JP-A- 2003 225 969**
**JP-A- 2003 236 985    JP-A- 2004 122 577**

## Description

### TECHNICAL FIELD

The present invention relates to a resin-coated metal sheet used for body, bottom, and lid of container for food, and the like.

### BACKGROUND ART

Metal cans which are a kind of food-packaging containers have high mechanical strength and excellent heat resistance and hermetic sealability. With these advantageous characteristics, metal cans stores contents over a long period. In addition, they accept the contents at high temperatures and seal the contents in that high temperature state, and can store the contents in a heated state. Since they allow sterilization such as retorting easily, they acquire high reliability of safety and hygiene as the packaging containers. Furthermore, they have advantages of relatively easy source separation and collection of the used cans. The term "retorting" referred to herein signifies the heat treatment of cans filled with contents by high temperature steam or the like to thermally sterilize the contents.

Conventionally the metallic base materials for food cans adopt electrically chromium coated steel sheet (hereinafter also referred to as "ECCS sheet"), aluminum sheet, and the like. Since these metal sheets for containers are coated by a solvent-type coating consisting mainly of a thermosetting resin not only to prevent corrosion but also to keep the flavor of the contents (on the surface of the metal sheet facing the inner surface of the container) and to give decorative appearance and to protect printed face (on the surface of the metal sheet facing the outer surface of the container). The coating technique, however, has complex baking process and takes a long treatment time, and also raises a problem of emitting a large quantity of solvent. To solve these problems, a current main stream of the technology applies lamination of thermoplastic film on the heated metal sheet, and many kinds of technologies have been provided as the lamination method. The term "lamination" referred to herein signifies that at least one side of the metal sheet is coated by a resin film.

Many of above disclosed technologies focus on the improvement of the adhesion and the formability of film and metal sheet which is the base material. For example, JP-A-63-236640, (the term "JP-A" referred to herein signifies the "Unexamined Japanese Patent Publication"), describes the use of a film having a polar group, (polyester resin and the like), as the film. To secure the adhesion after working the metal sheet coated by polyethylene resin, JP-A-5-200961 actuates the film by applying corona discharge and other treatment to the film surface to increase the free energy on the film surface to bring the free energy to a level of $(38 \text{ to } 54) \times 10^{-3}$ N/m (38 to 54 dyn/cm).

When, however, these technologies are applied to food cans, the contents strongly adhere to the inner surface of the container on taking-out the contents from the container, which raises a problem of difficulty in taking-out the contents. The problem relating to the inside surface of food can is extremely important to encourage the customer's motivation for purchasing because the matter closely relates to the purchasing behavior of consumers. Nevertheless, both of above technologies do not consider the easiness of taking-out the contents, nor give improvement to the matter.

The inventors of the present invention studied the improvement of taking-out performance of the contents, and, as disclosed in JP-A-2001-328204, good taking-out performance of the contents was assured for the contents containing large quantity of fat, (for example, contents having poor adhesion, such as a marketed mixture of minced meat and egg), by adding a specific wax (carnauba wax) to the polyester resin, thus letting the wax exist on the surface of the resin.

The technology, however, not necessarily secured good taking-out performance of the contents of low fat and high protein, which have strong adhesion to the can.

In the future, along with the increasing health boom, the consumption of low fat and high protein foods will increase more than ever, thus the request for good taking-out performance of the contents is expected to increase.

Regarding the outer surface of food can, when the conventional metal sheet coated by a polyester resin is used so as the resin-coated side to become outer surface of the food can, there is appeared a phenomenon of discoloration of the resin layer into white turbid appearance, (what is called the "retort blushing"), during the high temperature sterilization such as retorting. Thus, there is a strong request to solve that kind of problem of decorative appearance on outer surface of can.

There are provided several technologies to improve the retort blushing on the film surface. For example, JP-A-6-155660 provides a technology of laminating a polyester resin on the metal sheet, specifically discloses a technology to control the crystallinity of the resin layer contacting the metal sheet and the crystal orientation in the resin layer not contacting the metal sheet. The technology was derived based on an assumption about the retort blushing as follows. That is, an amorphous resin layer at the side contacting the metal sheet shows different crystallization rate under the retorting between the dew-forming part and the dew-not-forming part on the surface of the metal sheet, which induces the formation of resin layers having different light refractive index and volume from each other, thus generating light scattering, thereby giving white appearance on the surface thereof.

In JP-A-5-331302, it is speculated that the rate of crystallization of polymer is low during retorting, thus the crystals slowly grow to coarse grains, thereby causing the retort blushing. Based on the speculation, the patent publication proposes the enhancement of the rate of crystallization of polymer during retorting to generate large numbers of fine crystals. Since, however, both technologies do not accurately grasp the mechanism of retort blushing, the maintaining decorative appearance is not sufficient, and they are not a kind of adequate improvement technologies.

For example, EP 1 174 457 A1 discloses a generic resin-coated metal sheet comprised of two layers, wherein the upper and the lower layer are of a similar nature and, therefore, form rather a single layer structure of an increased thickness. According to a further example, said patent document discloses a resin-coated metal sheet on which an upper and a lower layer are laminated, wherein the melting points of the polyester resin arranged are different and wherein a content of isophthalic acid of the lower polyester layer is 5% by mole.

However, said resin-coated metal sheet has at least a draw-back of a reduced adhesion property between the lower polyester resin layer and the metal sheet.

The first object of the present invention is to solve the above problems relating to the inner surface of food can. That is, the first object is to provide a resin-coated metal sheet for container that has excellent taking-out performance even for the contents of low fat and high protein.

The second object of the present invention is to provide a resin-coated metal sheet for container that satisfies the above requirements of the inner surface of can, that does not induce retort blushing even after the retorting, and that maintains the decorative appearance on the outer surface of can.

## DISCLOSURE OF THE INVENTION

The present invention provides a resin-coated metal sheet as defined in claim 1 and a container formed by the inventive resin-coated metal sheet as defined in claim 11.

For any of the above resin-coated metal sheets, preferably at least one layer of a polyester composition having 100 seconds or smaller shortest half-crystallization time at 5 to 20 $\mu$m of total thickness is formed on the metal sheet at opposite side to the side having the upper and the lower polyester resin layers thereon.

For any of the above resin-coated metal sheets, the polyester composition is preferably composed of 30 to 50% by mass of a polyester containing ethylene terephthalate as the main repeating unit and 50 to 70% by mass of a polyester containing butylene terephthalate as the main repeating unit.

For any of the above resin-coatedmetal sheets, the polyester composition preferably contains 0.65% by mass or less of a cyclic trimer of alkylene terephthalate.

For any of the above resin-coatedmetal sheets, the polyester composition preferably contains a colorant.

For any of the above resin-coated metal sheets, it is preferable that the polyester composition is composed of a plurality of resin layers, that a resin layer therein contacting the metal sheet contains 0.1 to 5% by mass of at least one organic colorant selected from the group consisting of quinophthalones, benzimidazolones, and isoindolinones to the quantity of a resin layer contacting the metal sheet, and that the uppermost layer in the composition has a resin layer having 0.5 $\mu$m or larger thickness and containing no colorant.

For any of the above resin-coated metal sheets, the lower polyester resin layer preferably has 0.04 or smaller average double-refractive index in the thickness direction, and the upper polyester resin layer preferably has 0.08 to 0.15 of average double-refractive index in the thickness direction.

## BRIEF DESCRIPTION OF THE DRAWINGS

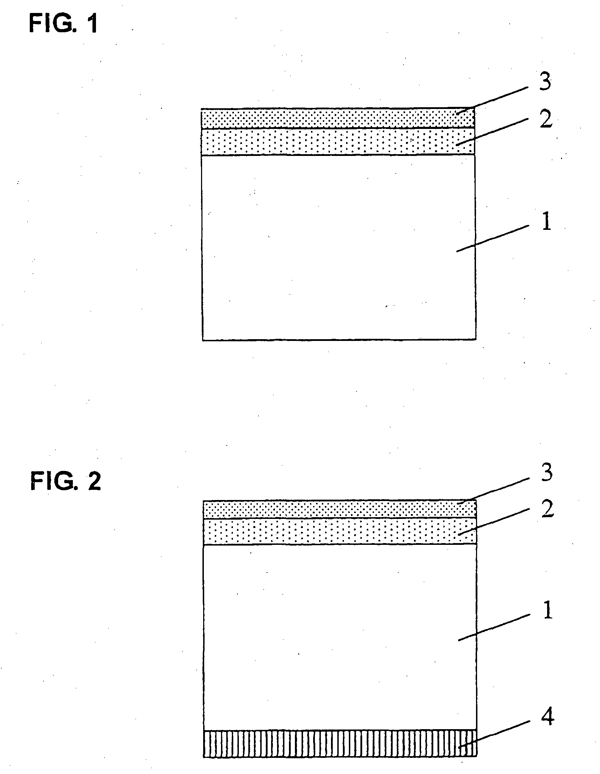

Figure 1 shows a schematic drawing of a resin-coated metal sheet according to the present invention, giving a metal sheet 1, a lower polyester resin layer 2, and an upper polyester resin layer 3.

Figure 2 shows a further schematic drawing of a resin-coated metal sheet giving a polyester composition 4, while giving other components, 1 to 3, same to those of Fig. 1.

Figure 3 illustrates the apparatus for manufacturing the resin-coated metal sheet for container according to Example 1.

## BEST MODE FOR CARRYING OUT THE INVENTION

The present invention is described below in detail.

(Metal sheet)

The metal sheet as the base material for the present invention can use aluminum sheet, mild steel sheet, and the like which are widely used as the materials for cans. Most suitable material for the metal sheet of the present invention includes a surface-treated steel sheet having two-layer coating, (what is called ECCS sheet), consisting of metallic chromium as the lower layer and chromium hydroxide as the upper layer. The coating weight of the metallic chromium layer and of the chromium hydroxide layer of ECCS sheet is not specifically limited. In view of adhesion after forming and of corrosion resistance, however, the coating weight is preferably in a range from 70 to 200 mg/m$^2$ for the metallic chromium layer and from 10 to 30 mg/m$^2$ for the chromium hydroxide layer, as chromium.

The description begins with the resin-coated metal sheet for container or the resin-coated metal sheet which assures excellent taking-out performance of low fat and high protein contents, and which has both the formability and the adhesion required as the working characteristics. Accordingly, the resin-coated metal sheet described in the following assumes to be used so as the upper polyester resin layer to come to the inner surface of the formed can.

The inventors of the present invention carried out detail study to solve the above issues relating to the inner surface of food can, and derived hints to obtain a resin-coated metal sheet for container, satisfying an obj ect of the present invention: the resin layer of the resin-coated metal sheet becoming the inner surface of the container formed by the metal sheet is made by a resin layer composed mainly of a polyester and containing an adequate quantity of an olefin wax.

(Lower polyester resin layer)

The lower polyester resin layer according to the present invention is formed on at least one side of the above-described metal sheet. The lower layer polyester resin is a polyethylene terephthalate containing 10 to 20 % by mole isophthaloyl group which has a 0.03 or smaller plane orientation factor among the above-described polyesters. The plane orientation factor can be selected using the average double-refractive index in the thickness direction of the resin layer as an index. For example, polyester resins having 0.03 or smaller plane orientation factor can be selected from those having 0.04 or smaller average double-refractive index. The reason of adopting that range of the orientation factor (the average double-refractive index) is the following.

Normal procedure for manufacturing a resin-coated metal sheet is to bring the resin contact with a hot metal sheet to establish compression-bonding, thus melting the resin at interface with the metal sheet and wetting the metal sheet to attain adhesion of the metal sheet with the resin. Consequently, to assure the adhesion between the resin and the metal sheet, the resin is required to be melted. The plane orientation factor (double-refractive index) of the resin at a portion contacting the metal sheet after melt-bonding decreases owing to the melting of the oriented crystals. As specified in the present invention, if the plane orientation factor of the resin in that part is 0.03 or smaller (0.04 or smaller double-refractive index), the film melt-wetting on melting thereof is at a sufficient level, or excellent adhesion can be assured. If the plane orientation factor exceeds 0.03, (if the double-refractive index exceeds 0.04), the adhesion decreases, which may result in the separation of resin layer at seaming section with the can lid, or other positions, after a high temperature and long time of retorting applied to food cans.

The double-refractive index in the thickness direction of the polyester resin layer can be determined by the following method.

The metal sheet is removed from the laminated metal sheet. Then, the retardation in the cross-sectional direction of the resin layer is determined using a polarization microscope, thus deriving the double-refractive index in the cross-sectional direction of the resin film. The incident linear polarized light in the film is divided into the linear polarized lights in two principal refractive index directions. At that moment, the light oscillation in the higher refractive index direction delays from the light oscillation in the lower refractive index direction, which induces a phase difference at the point of leaving the film layer. The phase difference is called the "retardation (R)", and the relation with the double-refractive index ($\Delta n$) is defined by the formula (1).

$$\triangle n = R/d \quad (1)$$

where, d is the thickness of the film layer.

The method for determining the retardation is described below. By letting a monochromatic light pass through a polarization plate, the linear polarized light is obtained. The linear polarized light is irradiated to a sample (film). Since the incident light generates retardation as described above, the light becomes an elliptical polarized light after passing through the film layer. When the elliptical polarized light passes through a senarmont compensator, the polarized light becomes a linear polarized light having an angle $\theta$ to the oscillation direction of the original linear polarized light. The measurement of $\theta$ is given by rotating the polarization plate. The relation between the retardation (R) and $\theta$ is defined by the formula (2).

$$R = \lambda \bullet \theta / 180 \qquad (2)$$

where, $\lambda$ is the wavelength of monochromatic light.

Accordingly, the double-refractive index ($\Delta$n) is defined by the formula (3) which is derived from the formulae (1) and (2).

$$\triangle n = (\theta \bullet \lambda / 180)/d \qquad (3)$$

The thickness of the lower polyester resin layer according to the present invention is necessarily in a range from 5 to 20 $\mu$m. If the thickness of the lower layer is smaller than 5 $\mu$. m, the adhesion becomes poor, which is not favorable. Inversely, if the thickness thereof exceeds 20 $\mu$m, the adhesion saturates, and no further improvement in the characteristics can be expected and the cost increases, which is also not favorable.

(Upper polyester resin layer)

Regarding the resin-coated steel sheet of the present invention, the upper polyester resin layer is formed on the above-described lower polyester resin layer. The upper polyester resin layer is exposed to the inner space of the container, (or contacts with the contents). The upper polyester resin layer contains an olefin wax in quantities from 0.1 to 5% by mass, which is the most important condition of the present invention. The upper polyester resin layer contains an olefin wax being a resin selected from the group consisting of the homopolyethylene terephthalate and a copolyethylene terephthalate containing 6% by mole or less isophthaloyl group. The term "contains an olefin wax" referred to herein signifies all kinds of states integrating with the resin, such as adhesion, lamination, mixing, or modification, and the state is generally achieved by adding these substances when the resin is melted in the film-forming step. The olefin wax generally has little polarity and is poor in reactivity, thus having a feature of difficulty in adhering with contents such as foods. However, the addition of olefin wax in an adequate quantity to the polyester resin allows the olefin wax to exist on the surface of the resin. That is, the olefin wax brings the surface of the resin layer inactive to the food contents, thus not allowing the contents to adhere to the resin surface, thereby drastically improving the taking-out performance of the contents.

Examples of applicable olefin wax to'be added are, a homopolymer or a copolymer of olefins, and a monomer which can copolymerize with olefins. Specifically, a copolymer with vinyl monomer, and a modified polymer thereof are typical examples. In concrete terms, their examples are, polyethylene (high density, low density, high molecular weight, low molecular weight, and the like), linear low density polyethylene, linear ultralow density polyethylene, polypropylene, ethylene-propylene copolymer, poly-4-methylenepehtene-1, ionomer resin, ethylene-vinyl acetate copolymer, ethylene-acrylic acid copolymer, ethylene-methyl methacrylate copolymer, modified polyolefin (for example, reaction product of homopolymer or copolymer of olefins with unsaturated carboxylic acid such as maleic acid and fumaric acid, acid anhydride, ester, or metal salt). These olefins may be used separately or in combination of two or more of them.

According to the present invention, polyethylene wax among the above-given examples is preferred as the olefin wax in view of compatibility with the polyester resin and of effectively inactivating the surface of the resin layer. More preferably, it is further effective to use a low molecular weight polyethylene wax having 1,000 to 10,000 of number average molecular weight (Mn).

The content of the olefin wax is specified to a range from 0.1 to 5% by mass to the quantity of the polyester resin layer to which the olefin wax is added. If the content of olefin wax is smaller than 0.1%, the quantity of olefin wax formed on the surface of resin layer becomes small, which deteriorates the taking-out performance of the contents. If the content thereof exceeds 5%, the taking-out performance of the contents becomes almost saturate, thus failing to attain high level of the effect. Furthermore, that large quantity region is the one giving technological difficulty in manuf, no page 15acturing the resin, resulting in poor productivity, and increasing the cost. Therefore, to fully cover the resin surface with the olefin wax, and to assure the productivity, the adding quantity of the olefin wax has to be in a range from 0.1 to 5%, and preferably from 1.0 to 3%.

The upper polyester resin layer according to the present invention is, however, specified to the ones having the plane orientation factor of larger than 0.06 and not larger than 0.15.

When the plane orientation factor is expressed using an index of average double-refractive index in the thickness direction of the resin layer, the upper polyester resin is selected to that having 0.08 to 0.15 thereof.

If the plane orientation factor is 0.06 or smaller (smaller than 0.08 of the average double-refractive index), the taking-out performance of the contents becomes insufficient. If the plane orientation factor exceeds 0.15 (larger than 0.15 of the average double-refractive index), a portion of the resin layer may break to generate cracks. The crack generation presumably occurs from the following mechanism.

In general, a polyester film formed by the biaxial stretching method has crystals oriented in the stretching direction. The quantity of the oriented crystals is determined on the basis of an index of the plane orientation factor of the film or of the average double-refractive index in the film thickness direction. The olefin wax in the upper polyester resin layer exists only in the amorphous zone of the upper polyester resin layer, and cannot exist in the zone forming the crystal structure. Accordingly, when the quantity of crystals of the upper polyester resin layer increases, the quantity of olefin wax which can exist in the upper polyester resin layer decreases. As a result, the olefin wax is expelled to precipitate on the surface of the upper polyester resin layer, which allows to enhance the surface inactivation. Therefore, if the plane orientation factor, which is an index of the quantity of oriented crystals, is 0.06 or smaller (or the double-refractive index is smaller than 0.08), the quantity of olefin wax remained in the polyester resin layer increases, which results in insufficient inactivationof the surface, thereby presumably failing to attain sufficient take-out performance of the contents. Since the impact resistance after the container-working becomes good with increase in the quantity of oriented crystals in the polyester resin layer, the plane orientation factor is preferably larger than 0.06 (the double-refractive index of 0.08 or larger). On the other hand, if the plane orientation factor of the upper polyester resin layer exceeds 0.15 (the double-refractive index exceeds 0.15), the amorphous zone having high flexibility becomes narrow, which results in insufficient formability. That is, the material cannot endure forming the container, and a part of the resin layer breaks to generate cracks. Therefore, the plane orientation factor of the upper polyester resin layer has to be in a range from larger than 0.06 to not larger than 0.15 (the average double-refractive index in the thickness direction has to be in a range from 0.08 to 0.15).

The thickness of the upper polyester resin layer according to the present invention has to be in a range from 0.5 to 10 $\mu$m. If the thickness of the upper layer is smaller than 0.5 $\mu$m, the quantity of high-orientation zone becomes insufficient, which deteriorates the impact resistance. If the quantity thereof exceeds 10 $\mu$m, the quantity of high-orientation zone becomes excessive, thus the formability becomes not sufficient. As a result, the material cannot endure the work to form the container, and a part of the resin layer breaks to generate cracks.

The resin-coated steel sheet according to the present invention has a suitable combination of resin types for the upper polyester resin layer and the lower polyester resin layer. That is, the lower polyester resin layer is a copolyethylene terephthalate containing 10 to 22% by mole of isophthaloyl group, and the upper polyester resin layer is composed of any one resin selected from the group consisting of a homopolyethylene terephthalate and a copolyethylene terephthalate containing 6% by mole or less of isophthaloyl group.

For the upper polyester resin layer, if the degree of copolymerization of the contained isophthalic acid is 6% by mole or smaller, the orientation state specified by the present invention is easily actualized on forming the resin layer on the metal sheet by thermal melt-bonding because the melting point of the resin layer is difficult to decrease and because the resin layer is hardly melted by heat. On the other hand, if the degree of copolymerization of isophthalic acid in the lower polyester resin layer is 10% by mole or larger, the melting point of the resin decreases, thus allowing the resin to readily melt. If the orientation state in the upper layer is controlled to keep the state within the specified range of the present invention, on forming both resin layers on the metal sheet, the melting to wet the lower polyester resin on the metal sheet becomes sufficient, which allows generating excellent adhesion. Consequently, to increase the degree of copolymerization of the isophthalic acid in the lower polyester resin layer is preferable in view of the effect of the present invention. However, the resin cost also increases so that the degree of copolymerization of isophthalic acid in the lower layer is preferably specified to 22% by mole or smaller form the economic point of view.

(Colorant)

For the resin-coated steel sheet according to the present invention, a colorant is preferably contained in any of the upper polyester resin layer and the lower polyester resin layer. In that case, the colorant may be added to at least one of the upper layer and the lower layer.

By adding the colorant to the upper polyester resin layer and/or the lower polyester resin layer, the base metal sheet is concealed and various colors inherent to the resin can be given. From the objective to conceal the base metal sheet, the colorant is added more preferably to the lower layer. On the other hand, providing light brightness colorutilizing the gloss of base metal, not completely concealing the base metal sheet, can also be applied to attain excellent decorative appearance. Furthermore, different from the printing on the resin surface, since the coloration is done by directly adding the colorant into the resin, there arises no problem of discoloration during the container-forming process, and favorable appearance can be maintained. The adding quantity of the colorant is not specifically limited. Generally, when the content of colorant in the resin layer exceeds 30% by mass, the concealing effect saturates, thus the content of colorant is preferably 30% by mass or smaller from the economical point of view. The term "adding quantity of the colorant" referred to herein signifies the percentage to the upper polyester resin layer or the lower polyester resin layer containing the colorant. For example, when the colorant is added to the lower layer, the term signifies the percentage of the colorant to the lower polyester resin layer.

Although the colorant may be either dye or pigment, pigment is preferred.

The pigment is preferably the one that performs excellent decorative appearance after forming the container. From this point of view, an organic pigment and an inorganic pigment such as titanium dioxide can be used. Those kinds of colorant are preferable because they have strong coloring force and high extendibility so that they maintain good decorative appearance after forming the sheet into container.

In particular, for the above-described resin-coated steel sheet according to the present invention, when the upper polyester resin layer becomes the inner surface of the container formed by the sheet, use of titanium dioxide is preferred because the titanium dioxide gives fine color of the contents and provides clean appearance thereof after opening the container. Since those kinds of pigments have strong coloring force and extendibility, and since they are the safe hygienic substances approved by FDA, use of them is preferred also from these points.

The adding quantity of titanium dioxide is preferably in a range from 5 to 30% by mass to the quantity of the resin layer. If the quantity thereof is 5% by mass or larger, sufficient whiteness is attained, and good decorative appearance is assured. On the other hand, even the adding quantity of titanium dioxide exceeds 30% by mass, whiteness saturates. Therefore, from the economical reason, the adding quantity of titanium dioxide is preferably specified to 30% by mass or less, and more preferably in a range from 10 to 20% by mass.

When titanium dioxide is added, the addition to the lower layer is preferred because there is no fear of abrasion of resin on rubbing against the mold during forming into the container.

(Container)

According to the invention, a container formed by the inventive resin-coated metal sheet is provided. The description is about the resin-coated metal sheet for the container, which satisfies the above requirements on the inner surface of the can, does not induce retort blushing even after the retorting, and maintains the decorative appearance on the outer surface of the can. For the resin-coated steel sheet according to the present invention, the above-described upper polyester resin layer and the lower polyester resin layer are formed on one side of the metal sheet, while the opposite side therefrom on the metal sheet has a polyester composition (described later) on the surface thereof . According to the second aspect of the present invention, it is assumed that, after forming the can, the upper polyester resin layer comes to the inner surface side of the can, while the face containing the polyester composition (described later) comes to the outer surface side thereof.

According to the resin-coated metal sheet of the present invention, the polyester resin composition which comes to the outer surface side of the container formed by the metal sheet preferably has at least one layer having 5 to 20 $\mu$m in total thickness and containing polyester composition giving 100 seconds or smaller shortest half-crystallization time. If the requirements are satisfied, the retort blushing on the outer surface of the container occurred during retort sterilization treatment can be suppressed.

The polyester composition is generally formed as at least one layer film. The thickness of the polyester composition is preferably in a range from 5 to 20 $\mu$m as the total independent of single layer or plurality of layers. If the thickness of the polyester composition is 5 $\mu$m or larger, there is no possibility of flawing by rubbing or deteriorating appearance by exposing the metal surface during formation of can or during transportation thereof. When the thickness thereof exceeds 20 $\mu$m, there is no merit of performance, and merely increases the cost.

The reasons of suppression of retort blushing phenomenon are described below.

Generally, when a metal sheet coated by a polyester resin is used so as the resin to become outer surface side after forming a food can, and when the food can is subjected to retorting, there is appeared retort blushing phenomenon on the resin layer at outer surface side, in many cases. That phenomenon comes from the formation of fine bubbles inside the resin film, which bubbles then scatter the light to give white turbid appearance. An investigation of the inventors of the present invention revealed that the bubbles formed in the resin layer have features described below.

Those bubbles are not formed when the can is heated in a dry and hot environment. Furthermore, even the can without filling contents, or in a vacant state, is treated by retorting, no bubble is formed. The bubbles are not necessarily observed over the whole thickness range of the outer surface resin layer, and are observed in the vicinity of interface contacting the steel sheet.

Based on the above features, the bubble formation in the outer surface resin layer accompanied with the retorting occurs presumably following the mechanism described below.

From the beginning of the retorting, the can is exposed to high temperature steam, and a portion of the steam enters inside the outer surface film, then finally reaches close to the interface with steel sheet. At the beginning of retorting, the zone near the interface between the outer surface resin and the steel sheet is cooled from inside by the contents, thus the steam entered the interface becomes condensate. With time during the retorting, the contents increase their temperature, and the condensate at the interface with the steel sheet again vaporizes. The vaporized water vapor again passes through the resin layer to leave the resin layer. The vacant space after leaving the condensate presumably becomes the bubbles.

Bubbles are observed only in the zone near the interface with steel sheet partly because the position of forming the condensate is at near the interface. Another presumable reason of the phenomenon is that the resin, in the vicinity of the interface, melted by contacting with the hot metal sheet is an amorphous resin giving mechanically soft and being readily deformed even after cooled and solidified, thus the resin is easily deformed and is readily forming bubbles.

Therefore, to prevent retort blushing, the suppression of bubble formation in the film is important, and the methods applied in the related art cannot be expected to attain substantial improvement.

In this regard, as the means to prevent bubble formation in the resin layer at outer surface of can during retorting, the inventors of the present invention speculated that an effective means is to promptly crystallize the amorphous polyester part in the polyester resin layer at outer surface side by the heat generated during retorting, thus to increase the strength of the amorphous part. Specifically, the shortest half-crystallization time of the resin of the polyester resin layer is specified to 100 seconds or smaller. Short half-crystallization time means the high thermal crystallization rate. Thus, if only the shortest half-crystallization time is 100 seconds or smaller, the bubble formation is effectively prevented, thus suppressing the retort blushing.

If the shortest half-crystallization time exceeds 100 seconds, the retort blushing cannot be suppressed because the crystallization rate of the resin is slow, thus the crystallization of amorphous polyester part using the heat of retorting does not fully proceed, and failing to attain the increased strength to a degree for suppressing the bubble formation.

The term "shortest half-crystallization time" referred to herein signifies, within a temperature range inducing the crystallization of the resin, the shortest half-crystallization time among the half-crystallization times determined at the respective temperature levels.

The half-crystallization time can be determined in accordance with Teruo Iwanami, Ryozo Takai et al., Polymer Chemistry Vol.29, No.323, pp.139-143 (1972), or J.H.Magill, Polymer, Vol.2, 221 (1961).

For example, the determination is done by the following procedure. A molten resin sample is placed between orthogonal polarizing plates, and the resin is crystallized at a constant temperature. The intensity of light transmitting an optically anisotropic crystal, which intensity increases along with the crystallization of the resin, is determined with time, (depolarized light intensity method). Then, from the relation of the transmission intensity and the time, the half-crystallizationtime, i.e., the time for the crystallization degree to become half, is determined. The half-crystallization times are determined at specified intervals of temperature by the above method, and the shortest time among thus determined values is adopted as the shortest half-crystallization time.

The shortest half-crystallization time can be determined using a polymer crystallization rate tester (MK-801, manufactured by Kotaki Seisakusho KK.) For example, 8 mg of resin sample is placed in a melting furnace of the tester, which sample is then heated in a nitrogen atmosphere to a temperature of higher than the maximum melting point of the resin by 50°C for 1 minute to melt the sample. Immediately after melting, the sample is transferred to a crystallization bath in the tester to immerse therein. The time after 10 seconds have passed is adopted as t=0, thus begins the determination of depolarized light intensity. Considering the time that the sample reaches a thermal equilibrium, the crystallization bath is regulated so as the sample temperature to become a constant level within 10 seconds after immersing the sample. The depolarized light intensity determined at t=0 is expressed as $I_0$, and the depolarized light intensities I at the respective times t are plotted on log t scale, thus obtaining a depolarized light intensity curve. The depolarized light intensity that reaches a definite value in the process of crystallization is expressed as Ig. Then the relation between the degree of crystallization and the depolarized light intensity is represented by the formula:

$$X_c = (I_0 - I_t) / (I_0 - I_g)$$

where, $X_c$ is the degree of crystallization, and It is the depolarized light intensity at t seconds after the beginning of the determination.

The term "maximum melting point of the resin" referred to herein designates the value determined by a differential scanning calorimeter (mDSC model, manufactured by AT Instruments) in an inert gas atmosphere under the condition of 20°C/min of temperature-rise speed. Generally, the differential scanning calorimeter shows one, two, or more of endothermic peaks. the "maximum melting point of the resin" designates the highest temperature among the temperatures given by the endothermic peaks. The depolarized light intensity method is an effective means to determine a rapid crystallization rate, (refer to "New ExperimentalLectures" (Maruzen Co., Ltd.), and Polymer Chemistry Vol.29, No.139, pp.323 and 336, (The Society of Polymer Science, Japan)).

As of these polyester compositions having 100 seconds or smaller shortest half-crystallization time, a preferred one is a mixture of 30 to 50% by mass of a polyester having ethylene terephthalate as the main repeating unit (hereinafter referred also to as the "polyester (I)"), and 50 to 70% by mass of a polyester having butylene terephthalate as the main repeating unit (hereinafter referred also to as the "polyester (II)"). If the percentage of the polyester (I) is 50% by weight or smaller, and the percentage of the polyester (II) is 50% by weight or larger, the effect to suppress the bubble formation within the film is high during retorting so that the effect to prevent retort blushing of the film becomes high, and the decorative appearance is satisfactorily maintained.

If the percentage of the polyester (I) is 30% by weight or larger, and the percentage of the polyester (II) is 70% by weight or smaller, the retort blushing during retorting can be suppressed, and the elastic modulus of the resin layer increases, thus the resin layer is hardly flawed during transportation and forming stage.

The term "polyester having the main repeating unit" referred to herein signifies a copolyester having 50% by mole or larger content of the given repeating unit, or a homopolyester composed of the given repeating unit. The term "given repeating unit" referred to herein corresponds to, for example, an ethylene terephthalate group of the polyester (I).

In more detail description, the polyester (I) is a polycondensated product of terephthalic acid with ethylene glycol as the main components. If the percentage of the polyethylene terephthalate component is 50% by mole or larger, other components maybe copolymerized. The other copolymerization components may be an acid component or an alcohol component. Examples of the acid component are: an aromatic dicarboxylic acid such as isophthalic acid, phthalic acid, and naphthalene dicarboxylic acid; an aliphatic dicarboxylic acid such as adipic acid, azelaic acid, sebacic acid, and decane dicarboxylic acid; and an alicyclic dicarboxylic acid such as cyclohexane dicarboxylic acid. Examples of the alcohol component are: an aliphatic diol such as butanediol and hexanediol; and an alicyclic diol such as cyclohexane dimethanol. They may be used separately or in combination of two or more of them. The mixing ratio of the copolymerization components is, although it depends on the kind of them, in a range so as the melting point of the polymer to become 210°C to 256°C, preferably from 215°C to 256°C, and more preferably from 220 °c to 256°C. If the melting point of the polymer is below 210°C, the heat resistance deteriorates. If the melting point thereof is above 256°C, the crystallinity of the polymer becomes excessive, which deteriorates the formability.

The polyester (II) is a polycondensated product of terephthalic acid with 1,4-butanediol as the main components. If the percentage of polybutylene terephthalate component is 50% by mole or larger, other components may be adopted to copolymerize. The other copolymerization components may be an acid component or an alcohol component. Examples of the acid component are: an aromatic dicarboxylic acid such as isophthalic acid, phthalic acid, and naphthalene dicarboxylic acid; an aliphatic dicarboxylic acid such as adipic acid, azelaic acid, sebacic acid, and decane dicarboxylic acid; and an alicyclic dicarboxylic acid such as cyclohexane dicarboxylic acid. As of these, isophthalic acid, 2,6-naphthalene dicarboxylic acid, and adipic acid are preferred. Examples of the alcohol component are: an aliphatic diol such as ethylene glycol and hexanediol; and an alicyclic diol such as cyclohexane dimethanol. They may be used separately or in combination of two or more of them. The mixing ratio of the copolymerization components is, although it depends on the kind of them, in a range so as the melting point of the polymer to become 180°C to 223°C, preferably from 200°C to 223°C, and more preferably from 210°C to 223°C. If the melting point of the polymer is 180°C or above, the crystallinity as the polyester becomes high, thereby improving the heat resistance.

The intrinsic viscosity of the starting material polyester used to manufacture the polyester composition according to the present invention is preferably in a range from 0.5 to 0.8 dl/g for the polyester (I), more preferably from 0.54 to 0.7 dl/g, and most preferably from 0.57 to 0.65 dl/g. The intrinsic viscosity of 0.5 dl/g or larger provides a resin film having sufficient mechanical strength, and provides a practical composition. The intrinsic viscosity of 0.8 dl/g or smaller provides superior formability. Regarding the intrinsic viscosity of the polyester (II), 0.6 to 2 dl/g is preferred, 0.8 to 1.7 dl/g is further preferred, and 0.85 to 1.5 dl/g is most preferred. The intrinsic viscosity of 0 . 6 dl/g or larger provides a resin film having sufficient mechanical strength, and provides a practical composition. Although the upper limit of the intrinsic viscosity is not specifically given, 2 dl/g or smaller value is preferred in view of raw material polyester and of productivity of resin film.

For the case that the conventional metal sheet coated by a polyester resin is used as the outer surface of food can, there arises another problem of decorative appearance. That is, the oligomer in the polyester resin deposits on the resin surface during the high temperature sterilization such as retorting. This is a problem of deteriorating the decorative appearance because the oligomer gives appearance of white powder, (hereinafter referred to also as the "white haze").

The main stream of preventive measures to the white haze in the related art is to decrease the quantity of oligomer in the polyester resin.

For example, JP-A-10-110046 discloses that the precipitation of oligomer can be suppressed even under the high temperature treatment such as retorting if only the quantity of oligomer in the film is defined to 1.3% by weight or smaller. The retorting applied to food cans is generally, however, a high temperature and long time of treatment such as 120 °C for 90 minutes, thus the level of 1.0% by weight or larger quantity of oligomer, given in the examples of the disclosure, cannot practically prevent the white haze. Furthermore, JP-A-11-79189 discloses a technology to suppress the elution of ester oligomers from the polyester resin. Even the disclosed technology, however, the maintaining decorative appearance does not reach the satisfactory level.

According to the resin-coated metal sheet of the present invention, the above polyester resin composition becoming the outer surface of the container preferably contains the cyclic trimer of alkylene terephthalate at or smaller than 0. 65% by mass. With that content level, not only the retort blushing but also the white haze can be prevented.

That is, the inventors of the present invention revealed that the oligomer that becomes the main cause of white haze is the cyclic trimer of alkylene terephthalate, (hereinafter referred to also as the "cyclic trimer"). As of the cyclic trimer of alkylene terephthalate, significantly affecting one is the cyclic trimer of ethylene terephthalate in polyethylene terephthalate. The term "alkylene terephthalate" referred to herein includes not only ethylene terephthalate, propylene terephthalate, and butylene terephthalate, but also oligo-methylene terephthalates of about C3 to C10, such as trimethylene terephthalate and tetramethylene terephthalate.

If the percentage of the cyclic trimer in the polyester composition is 0.65% by mass or smaller, the precipitation of the cyclic trimer can be suppressed even under the high temperature and long time of treatment such as retorting given to food cans, thus attaining excellent decorative appearance. The lower limit of the cyclic trimer quantity is preferably as close as to zero. However, decreasing the quantity of the trimer to smaller than 0.3% by weight is difficult from the point of industrial practice. Therefore, generally the lower limit of the cyclic trimer is about 0.3% by weight. Consequently, a preferable range of the content of the cyclic trimer in the polyester composition according to the present invention is from 0.3 to 0.65% by weight, and more preferably from 0.3 to 0.5% by weight.

The means to control the content of the cyclic trimer in the polyester composition to 0.65% by weight or smaller is not specifically limited. An example of the means is the one in which the polyester is processed into the film, followed by applying extraction-removal of the cyclic trimer from the film using water or an organic solvent. The extraction-removal method may be applied during the process for manufacturing the starting material polyester. An alternative effective means is to conduct polymerization in the stage of preparing master batch of the polyester so as to decrease the formation of oligomer. That type of decreasing method includes heating method under reduced pressure, solid phase polymerization method, and extraction method mentioned above. Those methods may be applied separately or in combination of them.

Furthermore, for the resin-coated steel sheet according to the present invention, by the addition of a colorant to the polyester composition becoming to the outer surface of the container formed by the steel sheet, the base metal sheet can be concealed, and various colors intrinsic to the resin can be provided. From the objective of concealing the base metal sheet, the colorant is added more preferably to the portion in the composition as close to the base metal as possible. On the other hand, it is also possible that concealing the base metal sheet is left in an incomplete state, and the metallic gloss of the base metal is utilized to provide a light brightness, which also attains excellent decorative/appearance. In addition, different from the printing on the resin surface, since the colorant is directly added to the resin to generate color, there arises no problem of discoloration during the container-forming stage, maintaining good appearance. Generally, although painting and printing is given after forming the container, a portion of the process can be eliminated by forming the colored resin layer, which decreases cost and suppresses emissions of organic solvent and carbon dioxide.

The adding colorant may be a dye or a pigment. However, pigment is preferred. After forming the container, excellent decorative appearance is required so that there are applicable an organic pigment such as quinophthalones, benzimidazolones, and isoindolinones, and an inorganic pigment such as titanium dioxide.

As of these, a preferable colorant is at least one organic pigment selected from the group consisting of quinophthalones, benzimidazolones, and isoindolinones. These pigments have strong coloring power and high extendibility, while giving high transparency, thus they provide light brilliant appearance after forming the can. If the polyester composition is composed of a plurality of layers, the above organic pigments are preferably added to a layer not the uppermost layer. Those organic pigments have a feature of hardly bleeding on the surface of the resin layer even after the retorting. Nevertheless, the bleed-out can be surely suppressed by creating a non-added layer (clear layer) of 0.5 $\mu$m or larger thickness on the resin layer containing the pigment.

Addition of at least one organic pigment of quinophthalones, benzimidazolones, and isoindolinones is preferably in a range from 0.1 to 5% by mass to the resin layer. If the adding percentage is 0.1% or larger, sufficient coloring effect is attained, and, 5.0% or smaller adding percentage allows to easily maintain the transparency, and provides excellent light brightness.

The manufacturing method is described below.

The description begins with the method for manufacturing the upper and lower resin layers according to the present invention, (hereinafter also referred to as the "film"). The polyester resin composition which becomes the outer surface of the formed container can also be manufactured by the similar method. The method for manufacturing the resin layer is not specifically limited, and the conventional methods can be applied. For example, each polyester resin is dried, at need, and separately and/or combinatory supplied to a known melting and laminating extruder to extrude the resin from a slit die in a sheet shape, which extruded resin is then closely contacted with a casting drum by a static electricity method and the like to cool and solidify thereon to obtain a non-stretch sheet.

The non-stretch sheet is stretched in the longitudinal direction and the width direction of the film to obtain a biaxially stretched film. The magnitude of the stretching can be arbitrarily selected depending on the degree of orientation, the strength, the modulus of elasticity, and the like of the target film. As of these methods, a preferred one is tandem method from the point of film quality, and specifically preferred ones are the successive biaxial stretching method applying longitudinal stretching followed by width stretching, and the simultaneous biaxial stretching which gives both the longitudinal stretching and the width stretching at almost simultaneously.

The method to add colorant to the upper polyester resin layer, the lower polyester resin layer, or the polyester composition is generally the following one. That is, the colorant is mixed with the molten polyester chips before subjected to solid-phase polymerization, and the colored polyester chips and the non-colored polyester chips are mixed together at a desired ratio, which mixture is then melted and extruded.

The next description is about the method for manufacturing the resin-coated metal sheet by laminating thus obtained film onto the metal sheet. According to the present invention, an applicable method is, for example, that a metal sheet is heated to a temperature above the melting point of the film, and the resin film is attached onto each side of the heated metal sheet using a compression-bonding rolls (hereinafter referred to also as the "laminate rolls"), thus conducting thermal melt-bonding.

The lamination condition is adequately selected to obtain the resin layer specified by the present invention. For example, when the temperature of starting the lamination is selected to 220°C or above, the thermal history on the film until the end of the lamination is selected preferably to a range from 1 to 20 msec of exposing the film at the melting point or above. To attain that laminating condition, it is necessary to, adding to the lamination at high speed, cool the film during adhesion. Although the compressive force during lamination is not specifically limited, the face pressure in a range from 9.8 to 294 N (1 to 30 kgf/cm$^2$) is preferred. Within that range of face pressure, the thermal history of film can be kept in the above preferable range, and sufficient adhesion is attained.

According to the present invention, in principle the upper polyester resin layer, the lower polyester resin layer, or the polyester composition are formed into film, followed by coating on the metal sheet. If, however, the specification of the target resin layer is within the range of the present invention, the melt-extrusion lamination may be applied. According to the method, the formation of resin may not be formed into film but is melted to directly coat the surface of metal sheet.

Examples

The following is the description about Examples of the present invention.

A cold-rolled steel sheet of 0.18 mm in thickness and 977 mm in width was treated by degreasing and pickling. Thus treated cold-rolled steel sheet was plated in a plating bath containing $CrO_3$, $F^-$, and $SO_4^{2-}$ to obtain an electrically chromium coated steel sheet (ECCS sheet). The plated steel sheet was treated by interim rinsing, and then was electrolyzed in a chemical conversion treatment liquid containing\ $CrO_3$ and $F^-$. The electrolysis conditions (current density, electric quantity, and the like) in the chemical conversion treatment were controlled to adjust the coating weight of metallic chromium and of chromium hydroxide to 120 ing/m$^2$ and 15 mg/m$^2$ as Cr, respectively.

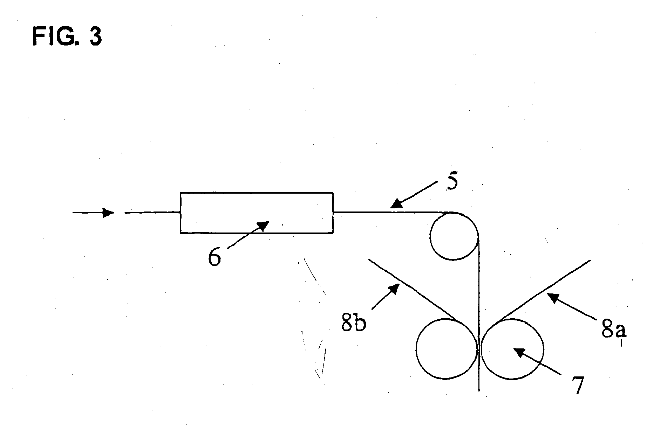

With a laminating apparatus shown in Fig. 3, the ECCS strip 5 was heated in a metal-strip heating apparatus 6. Then, on one side of the ECCS strip 5, each of the films 8a shown in Table 1-1 and Table 1-2 was thermally melt-bonded as the upper polyester resin layer and the lower polyester resin layer becoming the inner surface of the container after being formed in the container, while on the other side thereof, each of the films 8b given in Table 3-1 and Table 3-2 was thermally melt-bonded as the polyester composition becoming the outer surface of the container formed by the strip 5, using laminate rolls 7. Thus, the resin-coated metal sheet was manufactured.

The laminate rolls 7 were internal water-cooling type to forcefully circulate cooling water therethrough to cool the rolls during thermal melt-bonding of the film. On conducting the lamination, the time until the film temperature at interface with the metal sheet reaches at or above the melting point of the film was adjusted between 1 and 20 msec.

Evaluation of the first aspect of the invention

The characteristics of the resin-coated metal sheet and the coating resin film for inner surface of the container, (the upper polyester resin layer and the lower polyester resin layer), obtained by the above method were determined by the respective methods of (1) to (5) to evaluate. The results are given in Table 1-1, Table 1-2, and Table 2.

(1) Plane orientation factor

The refractive index in the longitudinal direction, the width direction, and the thickness direction, (Nx, Ny, and Nz, respectively), was determined using an Abbe's refractometer applying sodium D-ray (589 nm of wavelength) as the light source. Then, the plane orientation factor Ns was derived by the calculation of Ns = (Nx + Ny)/2 - Nz. The observation was given arbitarily at 10 points on the film after coating, and the average value of them was adopted as the plane orientation factor of the present invention.

(2) Double-refractive index in the thickness direction

The metal sheet was removed from the laminated metal sheet. Then, the resin film at inner surface of the container was observed to determine the retardation in the cross sectional direction using a polarization microscope. The observation was repeated in the thickness direction of the film at an interval of 1 $\mu$m, thus derived the distribution of double-refractive index in the thickness direction. The double-refractive index in the thickness direction for the upper polyester resin layer and the lower polyester resin layer was calculated as the average value of the observed values for the respective resin layers.

(3) Taking-out performance of contents

Using a draw-molding machine, the resin-coated metal sheet prepared in the above steps was formed into a cup under the condition of 100 mm of blank diameter and 1.88 of drawing ratio (the diameter before forming to the diameter after forming). Then, the cup was filled with homogeneously mixed minced meat (100% lean meat) and oatmeal, (corresponding to low fat and high protein food, which shows strong adhesion). After seaming the cup lid, the cup was treated by retorting (at 130°C for 90 minutes). After that, the lid was removed, and the cup was turned upside down to discharge the contents. The amount of contents left inside of the cup was observed. Furthermore, the cup was shaken for two to three times by hands to discharge the contents, and then the amount of contents left inside of the cup was visually determined. Thus, the easiness of taking-out the contents from the cup was evaluated based on the criterion given below.

(Evaluation ranking)

◎: Only once turning the cup upside down, (not shaking the cup by hands), the contents were discharged, and no adhesion was left inside of the cup.
○: Although the contents were left inside after only once turning the cup upside down, shaking the cup by hands for two to three times brought the cup leaving no adhesion of contents inside of the cup.
×: Even after shaking the cup with hands for two to three times, the contents were difficult to be discharged.

(4) Formability

After applying a wax to the laminated metal sheet, disks of 179 mm in diameter were punched from the metal sheet, which disks were drawn to 1.80 of drawing ratio, thus obtained shallow-drawn cans. The shallow-drawn cans were further subj ected to drawing at drawing ratio of 2.20 and 2.90, respectively. After that, the drawn cans were treated by dome-forming using a known method, followed by trimming and by neck-in-flanging, thus forming deep-drawn cans. Focusing on the neck-in position of thus obtained deep-drawn cans, the degree of damage of film was visually observed.

(Evaluation ranking)

◎: No damage was generated on the film after can-forming, and no film-discoloration was observed.
○: Although can-forming was applicable, film-discoloration was observed.
Δ: Although can-forming was applicable, film showed scraping.
×: The can was fractured at the body portion, and can-forming could not be performed.

(5) Adhesion

The target cans were the ones that acquired the "formable" evaluation (Δ or higher rank) in (4) Formability mentioned above. Samples for peel test, (15 mm in width and 120 mm in length), were cut from the can body section. A portion of the film on the cut sample was peeled at a major side edge of the sample. The peeled film was ripped in reverse direction (180°) from the peeling direction, and the peel test was given at 30 mm/min of tensile speed in a tensile tester, thus determined the adhesion force per 15 mm of width. The target surface to determine the adhesion force was the inner surface of the can.

(Evaluation ranking)

◎: 1.47 N/15 mm or more (0.15 kgf/15 mm or more)
○: 0.98 N/15 mm or more and less than 1.47 N/15 mm (0.10 kgf/15 mm or more and less than 0.15 kgf/15 mm)
×: less than 0.98 N/15 mm (less than 0.10 kgf/15 mm)

As seen in Table 2, the examples within the range of the present invention showed good taking-out performance of the contents, and gave good formability and adhesion. To the contrary, the comparative examples outside the range of the present invention were inferior in any of these characteristics.

Evaluation to the second aspect of the invention

The characteristics of the resin-coated metal sheet and the coating resin film for the outer surface of the container, (the polyester composition), were determined by the respective methods of (6) to (10) to evaluate the characteristics. The results are given in Table 3-1, Table 3-2, and Table 4.

(6) Determination of the shortest half-crystallization time

The shortest half-crystallization time was determined using a polymer crystallization rate tester (MK-801, manufactured by Kotaki Seisakusho KK.) under the condition of 8 mg of sample and 40°C to 150°C of temperatures.

(7) Resistance to retort blushing

The target cans were the ones that acquired the "formable" evaluation (Δ or higher rank) in (4) Formabilitymentioned above. After the can was filled with city water at normal temperature, a lid was seamed to close the can. Then, the can was placed in a retort facing the can bottom down, and the retorting was conducted at 125°C for 90 minutes. After the retorting, the changes of appearance on outer surface of the can bottom were visually observed.

(Evaluation ranking)

◎: No change in appearance was observed.
○: Slight cloudiness in appearance was observed.
×: Clouded in appearance (generation of retort blushing).

(8) Method for determining cyclic trimer of ethylene terephthalate in the polyester film before laminating.

A known method was applied to determine the content of the cyclic trimer in the laminated resin film. A 50 mg of film sample was dissolved in 2 ml of mixed solvent, (hexafluoroisopropanol/chloroform = 50/50). To the mixture, 8 ml of chloroform was added to dilute, and further acetonitrile was added to make 100 ml mixture as a whole volume. An aliquot of the 100 ml mixture was filtered, and the filtrate was analyzed by reverse phase high-performance liquid chromatography to determine the cyclic trimer of ethylene terephthalate.

(9) Resistance to white haze

The resin-coated metal sheet was placed in a retort sterilization oven, and retorting was conducted at 125°C for 90 minutes.
After the treatment, the quantity of oligomer precipitated on the surface of the resin-coated metal sheet was determined by the following method to evaluate the resistance to white haze.
The surface of film on the laminated steel sheet, (corresponding to the outer surface of the container), cut to 4 cmx 4 cm si ze was rubbed to clean by an absorbent cotton impregnated with a specified amount of methanol, which cotton was then rinsed by 10 ml of acetonitrile. An aliquot of the rinsed liquid was filtered, and the filtrate was then analyzed by reverse phase high-performance liquid chromatography to determine the cyclic trimer of ethylene terephthalate.

(Evaluation ranking)

◎: Precipitate of the cyclic trimer was smaller than 0.5 $\mu$g/cm$^2$, (the level that'the precipitate of the cyclic trimer cannot be identified by visual observation)
○: Precipitate of the cyclic trimer was 0.5 $\mu$g/cm$^2$ or larger and smaller than 1.0 $\mu$g/cm 2, (the level that the precipitate of the cyclic trimer is identified by visual observation)

×: Precipitate of the cyclic trimer was 1.0 μg/cm$^2$ or larger (Precipitation of the cyclic trimer was significant, and the surface became white haze)

(10) Resistance to elution of pigment

After retorting the resin-coated metal sheet under the condition of 125°C for 90 minutes, the surface of the metal sheet containing the polyester composition, (corresponding to the outer surface of the formed container), was rubbed with a white cloth, thereby observing the presence/absence of coloring by pigment on the cloth. In addition, the surface before the rubbing was observed by an electron microscope (SEM) at 1000 magnifications, thus checked in detail whether the pigment particles are eluted onto the surface or not.

(Evaluation ranking)

◎: After rubbing, the cloth was not colored, and observation by electron microscope (SEM) showed no elution of pigment particles.
○: After rubbing, although the cloth was not colored, observation by electron microscope (SEM) showed elution of pigment particles.
×: After rubbing, the cloth was colored, and observation by electron microscope (SEM) showed distinctive elution of pigment particles.

As seen in Table 4, Examples within the range of the present invention gave excellent resistance to white haze, retort blushing, and elution of pigment particles, and maintained excellent decorative appearance after retorting. To the contrary, Comparative Examples significantly deteriorated the decorative appearance after retorting, and failed to satisfy the characteristics required to the food cans.

Table 1-1

| No. | Resin layer applied to the inner surface of the container | | | | | | | | | |
|---|---|---|---|---|---|---|---|---|---|---|
| | Upper polyester resin layer | | | | | Lower polyester resin layer | | | | |
| | Polyester | Degree of copolymerization to PET (mole%) | Thickness (μm) | Plane orientation factor | Double-refractive index | Polyester | Degree of copolymerization to PET (mole%) | Thickness (μm) | Plane orientation factor | Double-refractive index |
| Example 1 | PET[1] | 0 | 1.5 | 0.09 | 0.10 | PET/I | 12 | 13.5 | 0.01 | 0.02 |
| Example 2 | PET | 0 | 1.5 | 0.09 | 0.10 | PET/I | 12 | 13.5 | 0.01 | 0.02 |
| Example 3 | PET | 0 | 1.5 | 0.09 | 0.10 | PET/I | 12 | 13.5 | 0.01 | 0.02 |
| Example 4 | PET | 0 | 1.5 | 0.09 | 0.10 | PET/I | 12 | 13.5 | 0.02 | 0.03 |
| Example 5 | PET | 0 | 1.5 | 0.09 | 0.10 | PET/I | 12 | 13.5 | 0.02 | 0.03 |
| Example 6 | PET | 0 | 1.5 | 0.09 | 0.10 | PET/I | 12 | 13.5 | 0.02 | 0.03 |
| Example 7 | PET | 0 | 1.5 | 0.09 | 0.10 | PET/I | 12 | 13.5 | 0.02 | 0.03 |
| Example 8 | PET | 0 | 1.5 | 0.13 | 0.13 | PET/I | 12 | 13.5 | 0.03 | 0.04 |
| Example 9 | PET | 0 | 1.0 | 0.09 | 0.10 | PET/I | 12 | 14.0 | 0.01 | 0.02 |
| Example 10 | PET | 0 | 0.5 | 0.09 | 0.10 | PET/I | 12 | 14.5 | 0.01 | 0.02 |
| Example 11 | PET | 0 | 5.0 | 0.09 | 0.10 | PET/I | 12 | 10.0 | 0.01 | 0.02 |
| Example 12 | PET | 0 | 9.0 | 0.09 | 0.10 | PET/I | 12 | 6.0 | 0.01 | 0.02 |
| Example 13 | PET/I[2] | 3 | 1.5 | 0.09 | 0.10 | PET/I | 12 | 13.5 | 0.01 | 0.02 |
| Example 14 | PET/I | 5 | 1.5 | 0.09 | 0.10 | PET/I | 12 | 13.5 | 0.01 | 0.02 |
| Example 15 | PET/I | 6 | 1.5 | 0.07 | 0.08 | PET/I | 12 | 13.5 | 0.01 | 0.02 |
| Example 16 | PET | 0 | 1.5 | 0.10 | 0.10 | PET/I | 15 | 13.5 | 0.01 | 0.02 |
| Example 17 | PET | 0 | 1.5 | 0.10 | 0.10 | PET/I | 10 | 13.5 | 0.02 | 0.02 |
| Example 18 | PET | 0 | 1.5 | 0.07 | 0.08 | PET/I | 12 | 15.5 | 0.01 | 0.02 |
| Comparative Example 1 | PET | 0 | 1.5 | 0.09 | 0.10 | PET/I | 12 | 13.5 | 0.01 | 0.02 |
| Comparative Example 2 | PET | 0 | 1.5 | 0.09 | 0.10 | PET/I | 12 | 13.5 | 0.01 | 0.02 |

(continued)

| No. | Resin layer applied to the inner surface of the container | | | | | | | | | |
| --- | --- | --- | --- | --- | --- | --- | --- | --- | --- | --- |
| | Upper polyester resin layer | | | | | Lower polyester resin layer | | | | |
| | Polyester | Degree of copolymerization to PET (mole%) | Thickness ($\mu$m) | Plane orientation factor | Double-refractive index | Polyester | Degree of copolymerization to PET (mole%) | Thickness ($\mu$m) | Plane orientation factor | Double-refractive index |
| Comparative Example 3 | PET | 0 | 1.5 | 0.04 | 0.05 | PET/I | 12 | 13.5 | 0.02 | 0.03 |
| Comparative Example 4 | PET | 0 | 1.5 | 0.16 | 0.10 | PET/I | 12 | 13.5 | 0.05 | 0.07 |
| Comparative Example 5 | PET | 0 | 12.0 | 0.10 | 0.10 | PET/I | 12 | 3.0 | 0.02 | 0.03 |
| Comparative Example 6 | PET/I | 8 | 1.5 | 0.05 | 0.06 | PET/I | 12 | 13.5 | 0.01 | 0.02 |
| Comparative Example 7 | PET | 0 | 1.5 | 0.09 | 0.10 | PET/I | 0 | 13.5 | 0.04 | 0.05 |
| 1): Polyethylene lerephthalale 2): Copolymerized ethylene terephthalate / isophthalale | | | | | | | | | | |

Table 1-2

| No. | Resin layer applied to the inner surface of the container | | | | |
| | Olefin wax in the upper layer | | Added colorant | | |
| | Kind | Added quanlity (wl.%) | Kind | Target resin layer | Added quantity (wt.%) |
|---|---|---|---|---|---|
| Example 1 | Polyethylene | 1.0 | - | - | - |
| Example 2 | Ethylene-acrylic acid copolymer | 1.0 | - | - | - |
| Example 3 | Ionomer | 1.0 | - | - | - |
| Example 4 | Modified polyethylene | 1.0 | - | - | - |
| Example 5 | Polyethylene | 0.3 | - | - | - |
| Example 6 | Polyethylene | 0.5 | - | - | - |
| Example 7 | Polyethylene | 3.0 | - | - | - |
| Example 8 | Polyethylene | 1.0 | - | - | - |
| Example 9 | Polyethylene | 1.0 | - | - | - |
| Example 10 | Polyethylene | 1.0 | - | - | - |
| Example 11 | Polyethylene | 1.0 | - | - | - |
| Example 12 | Polyethylene | 1.0 | - | - | - |
| Example 13 | Polyethylene | 1.0 | - | - | - |
| Example 14 | Polyethylene | 1.0 | - | - | - |
| Example 15 | Polyethylene | 1.0 | - | - | - |
| Example 16 | Polyethylene | 1.0 | Titanium dioxide | Lower layer | 20.0 |
| Example 17 | Polyethylene | 1.0 | Titanium dioxide | Lower layer | 20.0 |
| Example 18 | Polyethylene | 1.0 | Titanium dioxide | Lower layer | 20.0 |
| Comparative Example 1 | - | - | - | - | - |
| Comparative Example 2 | Polyethylene | 0.03 | - | - | - |
| Comparative Example 3 | Polyethylene | 1.0 | Titanium dioxide | Lower layer | 20.0 |
| Comparative Example 4 | Polyethylene | 0.05 | Titanium dioxide | Lower layer | 20.0 |
| Comparative Example 5 | - | - | - | - | - |
| Comparative Example 6 | Polyethylene | 1.0 | - | - | - |
| Comparative Example 7 | Polyethylene | 0.08 | - | - | - |

Table 2

| No. | Taking-out performance of contents | Formability | Adhesion |
|---|---|---|---|
| Example 1 | ◎ | ◎ | ◎ |
| Example 2 | ○ | ◎ | ◎ |
| Example 3 | ○ | ◎ | ◎ |
| Example 4 | ○ | ◎ | ◎ |
| Example 5 | ◎ | ◎ | ◎ |
| Example 6 | ◎ | ◎ | ◎ |
| Example 7 | ◎ | ◎ | ◎ |
| Example 8 | ◎ | ○ | ◎ |
| Example 9 | ◎ | ◎ | ◎ |
| Example 10 | ◎ | ◎ | ◎ |
| Example 11 | ◎ | ◎ | ◎ |
| Example 12 | ◎ | ◎ | ◎ |
| Example 13 | ◎ | ◎ | ◎ |
| Example 14 | ◎ | ◎ | ◎ |
| Example 15 | ○ | ◎ | ◎ |
| Example 16 | ◎ | ◎ | ◎ |
| Example 17 | ◎ | ◎ | ○ |
| Example 18 | ○ | ◎ | ◎ |
| Comparative Example 1 | × | ◎ | ◎ |
| Comparative Example 2 | × | ◎ | ◎ |
| Comparative Example 3 | × | ◎ | ◎ |
| Comparative Example 4 | × | × | - |
| Comparative Example 5 | × | × | - |
| Comparative Example 6 | × | ◎ | ◎ |
| Comparative Example 7 | × | ◎ | × |

Table 3-1

| No. | Polyester composition (applied to the outer surface of the container) | | | | | | Shortest half-crystallization time (sec) |
| | Upper layer | | | Lower layer | | | |
| | Polyester (I) (wt.%) | Polyester (II) (wt.%) | Total thickness (μm) | Polyester (I) (wt.%) | Polyester (II) (wt.%) | Total thickness (μm) | |
|---|---|---|---|---|---|---|---|
| Example 1 | 40 | 60 | 13.0 | - | - | - | 9 |
| Example 2 | 50 | 50 | 13.0 | - | - | - | 30 |
| Example 3 | 30 | 70 | 13.0 | - | - | - | 5 |
| Example 4 | 40 | 60 | 3.0 | 40 | 60 | 10.0 | 9 |
| Example 5 | 40 | 60 | 7.0 | 40 | 60 | 10.0 | 9 |
| Example 6 | 40 | 60 | 0.0 | 40 | 60 | 12.5 | 9 |

(continued)

| No. | Polyester composition (applied to the outer surface of the container) | | | | | | Shortest half-crystallization time (sec) |
|---|---|---|---|---|---|---|---|
| | Upper layer | | | Lower layer | | | |
| | Polyester (I) (wt.%) | Polyester (II) (wt.%) | Total thickness (μm) | Polyester (I) (wt.%) | Polyester (II) (wt.%) | Total thickness (μm) | |
| Example 7 | 40 | 60 | 3.0 | 40 | 60 | 9.0 | 9 |
| Example 8 | 40 | 60 | 3.0 | 40 | 60 | 9.0 | 9 |
| Example 9 | 40 | 60 | 3.0 | 40 | 60 | 9.0 | 9 |
| Example 10 | 40 | 60 | 3.0 | 40 | 60 | 9.0 | 9 |
| Example 11 | 40 | 60 | 3.0 | 40 | 60 | 9.0 | 9 |
| Example 12 | 50 | 50 | 3.0 | 50 | 50 | 9.0 | 30 |
| Example 13 | 30 | 70 | 3.0 | 30 | 70 | 9.0 | 5 |
| Example 14 | 40 | 60 | 3.0 | 40 | 60 | 12.0 | 9 |
| Example 15 | 40 | 60 | 5.0 | 40 | 60 | 15.0 | 9 |
| Comparative Example 1 | 70 | 30 | 3.0 | 70 | 30 | 9.0 | 110 |
| Comparative Example 2 | 80 | 20 | 3.0 | 00 | 20 | 9.0 | 250 |
| Comparative Example 3 | 40 | 60 | 3.0 | 40 | 60 | 9.0 | 9 |
| Comparative Example 4 | 85 | 15 | 0.2 | 40 | 60 | 13.0 | 340 |

Table 3-2

| No. | Polyester composition (applied to the outer surface of the container) | | | Content of the cyclic trimer[3] (wt.%) |
|---|---|---|---|---|
| | Added colorant | | | |
| | Kind | Target layer | Added quantity (wt.%) | |
| Example 1 | - | - | - | 0.55 |
| Example 2 | - | - | - | 0.60 |
| Example 3 | - | - | - | 0.45 |
| Example 4 | an isoindolinone | Lower layer | 0.7 | 0.55 |
| Example 5 | an isoindolinone | Lower layer | 0.6 | 0.35 |
| Example 6 | an isoindolinone | Lower layer | 0.7 | 0.55 |
| Example 7 | an isoindolinone | Lower layer | 0.7 | 0.55 |
| Example 8 | a benzimidazolone | Lower layer | 0.6 | 0.55 |
| Example 9 | a quinophthalone | Lower layer | 0.6 | 0.55 |
| Example 10 | a benzimidazolone | Lower layer | 3.0 | 0.55 |
| Example 11 | an isoindolinone | Lower layer | 1.5 | 0.55 |
| Example 12 | an isoindolinone | Lower layer | 0.6 | 0.55 |
| Example 13 | an isoindolinone | Lower layer | 0.6 | 0.55 |

(continued)

| No. | Polyester composition (applied to the outer surface of the container) | | | |
| --- | --- | --- | --- | --- |
| | Added colorant | | | Content of the cyclic trimer[3] (wt.%) |
| | Kind | Target layer | Added quantity (wt.%) | |
| Example 14 | an isoindolinone | Lower layer | 0.6 | 0.55 |
| Example 15 | an isoindolinone | Lower layer | 0.6 | 0.55 |
| Comparative Example 1 | an isoindolinone | Lower layer | 0.6 | 0.55 |
| Comparative Example 2 | an isoindolinone | Lower layer | 0.6 | 0.55 |
| Comparative Example 3 | an isoindolinone | Lower layer | 0.6 | 0.75 |
| Comparative Example 4 | an anthrakinone | Lower layer | 5.5 | 0.95 |
| 3): Cyclic trimer of ethylene terephthalate | | | | |

Table 4

| No. | Resistance to white haze | Resistance to retort blushing | Resistance to elution of pigment |
| --- | --- | --- | --- |
| Example 1 | ◎ | ◎ | ◎ |
| Example 2 | ○ | ○ | ◎ |
| Example 3 | ◎ | ◎ | ◎ |
| Example 4 | ◎ | ◎ | ◎ |
| Example 5 | ◎ | ◎ | ◎ |
| Example 6 | ◎ | ◎ | ○ |
| Example 7 | ◎ | ◎ | ◎ |
| Example 8 | ◎ | ◎ | ◎ |
| Example 9 | ◎ | ◎ | ◎ |
| Example 10 | ◎ | ◎ | ◎ |
| Example 11 | ◎ | ◎ | ◎ |
| Example 12 | ◎ | ◎ | ◎ |
| Example 13 | ◎ | ◎ | ◎ |
| Example 14 | ◎ | ◎ | ◎ |
| Example 15 | ◎ | ◎ | ◎ |
| Comparative Example 1 | ◎ | × | ◎ |
| Comparative Example 2 | ◎ | × | ◎ |
| Comparative Example 3 | × | ◎ | ◎ |
| Comparative Example 4 | × | × | × |

Industrial Applicability

The resin-coated steel sheet according to the present invention has a polyester layer assuming the inner surface and the outer surface of a container formed by the steel sheet. The container fabricated from the steel sheet shows excellent taking-out performance of contents, and has excellent formability and adhesion requested for the working of the container. Furthermore, the container prevents retort blushing which becomes the cause of deterioration in decorative appearance on outer surface thereof after retorting. Therefore, the resin-coated steel sheet of the present invention is widely applicable as the base material for the food containers.

**Claims**

1. A resin-coated metal sheet comprising:

   a metal sheet (1);
   a lower polyester resin layer (2) being a copolyethylene terephthalate containing isophthaloyl group, having a thickness of 5 to 20 $\mu$m and being formed on at least one side of the metal sheet (1); and
   an upper polyester resin layer (3) containing 0.1 to 5% by mass of an olefin wax, being a resin selected from the group consisting of a homopolyethylene terephthalate and a copolyethylene terephthalate containing 6% by mole or less of isophthaloyl group, having a plane orientation factor of larger than 0.06 and not larger than 0.15, a thickness of 0. 5 to 10 $\mu$m and being formed on the lower polyester resin layer (2),
   **characterized in that**
   the lower polyester resin layer (2) being a copolyethylene terephthalate contains 10 to 22% by mole of isophthaloyl group and has a plane orientation factor of 0.03 or smaller.

2. The resin-coated metal sheet according to claim 1, wherein the olefin wax is a polyethylene wax.

3. The resin-coated metal sheet according to claim 1, wherein the lower polyester resin layer contains a colorant.

4. The resin-coated metal sheet according to claim 3, wherein the colorant is titanium dioxide particles.

5. The resin-coated metal sheet according to claim 1, wherein at least one layer of a polyester composition having 100 seconds or smaller shortest half-crystallization time with 5 to 20 $\mu$m of total thickness is formed on the metal sheet at opposite side to the side having the upper and the lower polyester resin layers thereon.

6. The resin-coated metal sheet according to claim 5, wherein the polyester composition is composed of 30 to 50% by mass of a polyester containing ethylene terephthalate as the main repeating unit and 50 to 70% by mass of a polyester containing butylene terephthalate as the main repeating unit.

7. The resin-coated metal sheet according to claim 5, wherein the polyester composition contains 0.65% by mass or less of a cyclic trimer of alkylene terephthalate.

8. The resin-coated metal sheet according to claim 5, wherein the polyester composition contains a colorant.

9. The resin-coated metal sheet according to claim 5, wherein the polyester composition is composed of a plurality of resin layers, a resin layer therein contacting the metal sheet contains 0.1 to 5% by mass of at least one organic colorant selected from the group consisting of quinophthalones, benzimidazolones, and isoindolinones to the quantity of a resin layer contacting the metal sheet, and the uppermost layer in the composition has a resin layer having 0.5 $\mu$m or larger thickness and containing no colorant.

10. The resin-coated metal sheet according to any of claims 1 to 9, wherein the lower polyester resin layer has 0.04 or smaller average double-refractive index in the thickness direction, and the upper polyester resin layer has 0.08 to 0.15 of average double-refractive index in the thickness direction.

11. A container formed by a resin-coated metal sheet according to any of claims 1 to 10, **characterized in that** a polyester resin layer is formed on at least a side of the metal sheet which forms an inner surface of said container formed by the metal sheet, wherein the polyester resin layer formed on a side becoming the inner surface of the container has said upper polyester resin layer exposed to the inner space of the container, and said lower polyester resin layer contacting the metal sheet.

**Patentansprüche**

1. Ein harzbeschichtetes Metallblech, umfassend:

   ein Metallblech (1);
   eine untere Polyesterharzschicht (2) welches ein Copolyethylenterephthalat ist, das eine Isophthaloyl-Gruppe enthält, wobei die Polyesterharzschicht (2) eine Dicke von 5 bis 20 μm aufweist und auf mindestens einer Seite des Metallblechs ausgebildet ist (1); und
   eine obere Polyesterharzschicht (3), welche 0,1 bis 5 Massen-% eines Olefin-Wachses enthält, welche ein Harz ist ausgewählt aus der Gruppe bestehend aus einem Homopolyethylenterephthalat und einem Copolyethylenterephthalat, welches 6 Mol-% oder weniger an Isophthaloyl-Gruppen enthält, einen Flächenorientierungsfaktor (plane orientation factor) von größer als 0,06 und nicht größer als 0,15 aufweist, eine Dicke von 0, 5 bis 10 μm aufweist und welche auf der unteren Polyesterharzschicht (2) ausgebildet ist,
   **dadurch gekennzeichnet, dass**
   die untere Polyesterharzschicht (2) ein Copolyethylenterephthalat ist, welches 10 bis 22 Mol-% Isophthaloylchlorid Gruppen enthält und einen Flächenorientierungsfaktor von 0,03 oder kleiner aufweist.

2. Das harzbeschichtete Metallblech nach Anspruch 1, wobei das Olefin-Wachs ein Polyethylenwachs ist.

3. Das harzbeschichtete Metallblech nach Anspruch 1, wobei die untere Polyesterharzschicht ein Färbemittel enthält.

4. Das harzbeschichtete Metallblech nach Anspruch 3, wobei das Färbemittel durch Teilchen von Titandioxid gebildet wird.

5. Das harzbeschichtete Metallblech nach Anspruch 1, wobei mindestens eine Schicht aus einer Polyesterzusammensetzung mit einer kürzesten Halbkristallisationszeit von 100 Sekunden oder weniger mit einer Gesamtdicke von 5 bis 20 μm auf dem Blech ausgebildet ist, an einer Seite die der Seite mit den oberen und der unteren Polyesterharzschichten gegenüberliegt.

6. Das harzbeschichtete Metallblech nach Anspruch 5, wobei die Polyesterzusammensetzung 30 bis 50 Massen-% eines Polyesters enthält, welcher Ethylenterephthalat als Hauptwiederholungseinheit aufweist, und 50 bis 70 Massen-% eines Polyesters, welcher Butylenterephthalat als Hauptwiederholungseinheit aufweist.

7. Das harzbeschichtete Metallblech nach Anspruch 5, wobei die Polyesterzusammensetzung 0,65 Massen-% oder weniger eines cyclischen Trimers von Alkylenterephthalat enthält.

8. Das harzbeschichtete Metallblech nach Anspruch 5, wobei die Polyesterzusammensetzung ein Färbemittel enthält.

9. Das harzbeschichtete Metallblech nach Anspruch 5, wobei die Polyesterzusammensetzung aus einer Vielzahl von Harzschichten aufgebaut ist, eine Harzschicht darin, welche das Metallblech kontaktiert 0,1 bis 5 Massen-% mindestens eines organischen Farbstoffs enthält, ausgewählt aus den Gruppe bestehend aus Chinophthalone, Benzimidazolone und Isoindolinone im Verhältniss zu der Menge einer Harzschicht, welche das Metallblech kontaktiert, und die oberste Schicht in der Zusammensetzung eine Harzschicht mit einer Dicke von 0,5 μm oder mehr und kein Färbemittel enthält.

10. Die harzbeschichtete Metallblech nach einem der Ansprüche 1 bis 9, wobei die untere Polyesterharzschicht in der Dickenrichtung einen mittleren Doppelbrechungsindex von 0,04 oder weniger aufweist, und die obere Polyesterharzschicht in der Dickenrichtung 0,08 bis 0,15 des Durchschnittsdoppelbrechungsindex aufweist.

11. Ein Behälter mit einem harzbeschichteten Metallblech gebildet nach einem der Ansprüche 1 bis 10, **dadurch gekennzeichnet, dass** eine Polyesterharzschicht auf mindestens einer Seite des Metallbleches gebildet ist, welche eine innere Oberfläche des Behälters, der aus dem Metallblech gebildet ist, bildet, wobei bei der Polyesterharzschicht, welche auf einer Seite gebildet ist, welche die Innenoberfläche des Behälters bildet, die oberen Polyesterharzschicht in den Innenraum des Behälters freigelegt ist, und die untere Polyesterharzschicht das Metallblech berührt.

**Revendications**

1. Tôle métallique recouverte de résine comprenant :

   une tôle métallique () ;
   une couche inférieure de résine polyester (2) qui est un copolyéthylène téréphtalate contenant un groupe isophtaloyl ayant une épaisseur de 5 à 20 μm et étant formée sur au moins une face de la tôle métallique (1) ; et
   une couche supérieure de résine polyester (3) contenant de 0,1 à 5 % en masse d'une cire oléfine, qui est une résine choisie dans le groupe constitué d'un téréphtalate d'homopolyéthylène et d'un téréphtalate de copolyéthylène contenant au plus 6 % molaires d'un groupe isophtaloyl ayant un facteur d'orientation planaire supérieur à 0,06 et inférieur ou égal à 0,15, une épaisseur de 0,5 à 10 μm et étant formée sur la couche inférieure de résine polyester (2),
   **caractérisée en ce que**
   la couche inférieure de résine polyester (2) qui est un téréphtalate de copolyéthylène contient de 10 à 22 % molaires du groupe isophtaloyl et possède un facteur d'orientation plan inférieur ou égal à 0,03.

2. Tôle métallique recouverte de résine selon la revendication 1, dans laquelle la cire oléfine est une cire de polyéthylène.

3. Tôle métallique recouverte de résine selon la revendication 1, dans laquelle la couche inférieure de résine polyester contient un colorant.

4. Tôle métallique recouverte de résine selon la revendication 3, dans laquelle le colorant est constitué de particules de dioxyde de titane.

5. Tôle métallique recouverte de résine selon la revendication 1, dans laquelle au moins une couche d'une composition de polyester ayant une demi-période de cristallisation la plus courte inférieure ou égale à 100 secondes avec une épaisseur totale de 5 à 20 μm est formée sur la tôle métallique sur la face opposée à la face comportant sur celle-ci les couches inférieure et supérieure de résine polyester.

6. Tôle métallique recouverte de résine selon la revendication 5, dans laquelle la composition de polyester est constituée de 30 à 50 % en masse d'un polyester contenant du téréphtalate d'éthylène en tant qu'unité de répétition principale et de 50 à 70 % en masse d'un polyester contenant du téréphtalate de butylène en tant qu'unité de répétition principale.

7. Tôle métallique recouverte de résine selon la revendication 5, dans laquelle la composition de polyester contient 0,65 % en masse ou moins d'un trimère cyclique de téréphtalate d'alkylène.

8. Tôle métallique recouverte de résine selon la revendication 5, dans laquelle la composition de polyester contient un colorant.

9. Tôle métallique recouverte de résine selon la revendication 5, dans laquelle la composition de polyester est constituée d'une pluralité de couches de résine, une couche de résine dans celle-ci étant en contact avec la tôle métallique contient de 0,1 à 5 % en masse d'au moins un colorant organique choisi dans le groupe constitué de quinophtalones, benzimidazolones et isoindolines pour la quantité d'une couche de résine en contact avec la tôle métallique, et la couche la plus haute de la composition comporte une couche de résine ayant une épaisseur supérieure ou égale à 0,5 μm et ne contenant pas de colorant.

10. Tôle métallique recouverte de résine selon l'une quelconque des revendications 1 à 9, dans laquelle la couche inférieure de résine polyester possède un indice de réfraction double moyen inférieur ou égal à 0,04 dans le sens de l'épaisseur, et la couche supérieure de résine polyester possède un indice de double-réfraction moyen compris entre 0,08 et 0,15 dans le sens de l'épaisseur.

11. Récipient formé par une tôle métallique recouverte de résine selon l'une quelconque des revendications 1 à 10, **caractérisé en ce qu'**une couche de résine polyester est formée sur au moins une face de la tôle métallique qui constitue la surface interne dudit récipient formé par la tôle métallique, dans lequel la couche de résine polyester formée sur une face qui devient la surface interne du récipient comporte ladite couche supérieure de résine polyester exposée à l'espace interne du récipient, et ladite couche inférieure de résine polyester en contact avec la tôle métallique.

FIG. 1

FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63236640 A
- JP 5200961 A
- JP 2001328204 A
- JP 6155660 A
- JP 5331302 A
- EP 1174457 A1
- JP 10110046 A
- JP 11079189 A

**Non-patent literature cited in the description**

- **TERUO IWANAMI ; RYOZO TAKAI et al.** *Polymer Chemistry,* 1972, vol. 29 (323), 139-143
- **J.H.MAGILL.** *Polymer,* 1961, vol. 2, 221
- New ExperimentalLectures. The Society of Polymer Science. Maruzen Co., Ltd, vol. 29, 323, , 336